Europäisches Patentamt

European Patent Office

Office européen des brevets

(19)

(11)  EP 0 571 347 B1

(12)  **EUROPEAN PATENT SPECIFICATION**

(45) Date of publication and mention
of the grant of the patent:
**17.07.1996  Bulletin 1996/29**

(51) Int Cl.6: **H02K 1/27**

(21) Application number: **93850096.4**

(22) Date of filing: **05.05.1993**

(54) **Electric synchronous motor**

Elektrischer Synchronmotor

Moteur électrique synchrone

(84) Designated Contracting States:
**DE FR GB IT**

(30) Priority: **05.05.1992  SE 9201406**

(43) Date of publication of application:
**24.11.1993  Bulletin 1993/47**

(73) Proprietor: **ATLAS COPCO TOOLS AB, NACKA**
**S-120 21 Stockholm (SE)**

(72) Inventors:
• **Thord, Nilson Agne Gustaf**
**S-135 54 Tyresö (SE)**

• **Christer, Hansson Gunnar**
**S-114 59 Stockholm (SE)**

(74) Representative: **Pantzar, Tord**
**Atlas Copco Tools AB**
**Patent Department**
**105 23 Stockholm (SE)**

(56) References cited:
**DE-A- 3 716 771         US-A- 881 249**
**US-A- 3 482 156         US-A- 5 091 668**
**US-A- 5 099 160**

## Description

This invention relates to an electric synchronous motor having a stator with electric windings and a rotor comprised by a spindle and a magnetic core. The core is formed by a number of annular magnetic discs piled on said spindle and separated from each other by layers of an electrically insulating material.

It is previously known through Japanese Patent Kokai No 18950/88 to use a rotor with an axially laminated magnetic core consisting of a number of magnetic discs piled on a rotor spindle and kept together by an insulating thermosetting epoxy resin.

This known technique, however, creates problems when designing motors for quick acceleration and retardation and in which the rotor has a small mass. To keep down the weight of the rotor, the rotation speed has to be increased, and to keep down the moment of inertia the diameter has to be small. Instead, the length of the rotor has to be relatively long. By using this previously known technique to form a magnetic rotor there will be a problem to obtain a good enough bending strength, a high flexing stiffness and a high critical rotation speed. Due to the fact that the magnetic discs according to the above mentioned patent are kept together by an adhesive which normally has a lower resistance to tension and splitting than to pressure strain, the bending strength of the rotor is reduced. This creates the risk that the rotor spindle itself will have to take all the strain.

The invention solves the above problems by using the rigidness and pressure load resistancy of the magnetic material of the discs. This is accomplished by a rotor in accordance with the characterising features of claim 1. By prestressing the magnetic laminate to a stress level which is higher or equal to the occurring bending stresses caused by the load during operation, the hollow cylinder formed by the laminate discs will act as if it were a solid body with the same stiffness and tension strength as for compressive load and for bending.

Transferring torque from the active part of a long slim rotor to a small diameter spindle has also proved to be a serious problem for highly loaded motors in the past. Magnetic discs mounted with a pressfit or gluing work tend to loosen because of the twist deflexion of the spindle in combination with temperature changes. The axial clamping solves this problem as well.

The rotor design according to the invention is particularly suitable for so called slotless synchronous machines which permit high rotation speed but require a thick magnetic material in the direction of the magnetic flow to compensate for the wide magnetic air gap. A thick magnetic core, however, limits the spindle diameter.

A preferred embodiment of the invention is described below with reference to the accompanying drawing.

On the drawing:

Fig 1 shows a longitudinal section through an electric synchronous motor according to the invention.

Fig 2 shows separately a longitudinal section through the rotor of the motor in Fig 1.

Fig 3 is a fractional view, on a larger scale, of the rotor.

Fig 4 is a cross section of the rotor as indicated by IV-IV in Fig 2.

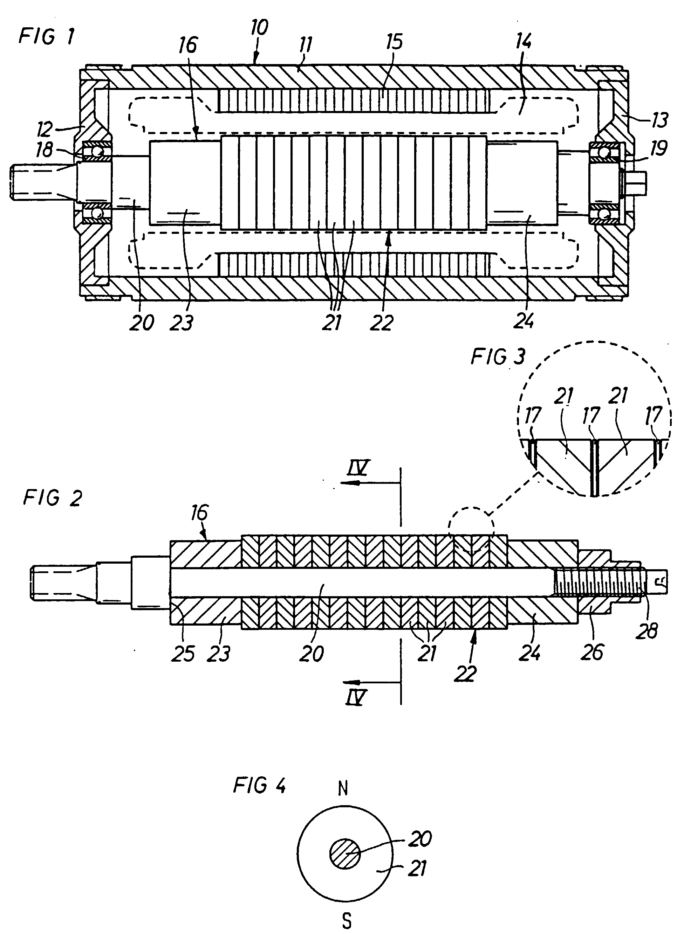

The motor according to the invention comprises a stator 10 including a cylindrical casing 11, two end walls 12, 13, windings 14 and a tubular core 15 surrounding the windings 14, and a rotor 16. The rotor 16 is journalled in bearings 18, 19 in the stator end walls 12, 13 and comprises a central spindle 20, a number of magnetic discs 21 separated by layers 17 of insulating material. See Fig 3. Each one of the insulating layers 17 comprises an aluminium oxide foil.

The discs 11 are all of the same thickness which is chosen so as to ensure eddy current losses of less than 40% of the losses caused by a one-piece magnet core. The desired thickness can be extracted from the equation:

$$F = C \frac{di^2}{dt} l_k^{\ 3} x$$

where

F is the eddy current losses in the magnets.

C is a constant depending on geometry, winding and material properties.

$\frac{di}{dt}$ is the derivative of the current at switching,

$l_k$ is the critical length of the eddy current path, i.e. disc thickness.

x is the number of discs covering the active rotor length.

The discs 21 are axially compressed between sleeve elements 23, 24 on the spindle 20 to a high prestress level so as to accomplish a high coefficient of elasticity of the rotor as a whole. The prestress level is high enough also to assure that no local tensile stress due to bending loads occurs in the magnetic material or in the insulating layers 17.

The pile of prestressed discs 21 forms a hollow cylindrical core 22 which has a low number of poles, preferably two. See Fig 4. For some applications two pairs of poles may be suitable. All discs 21 are arranged with the poles located in the same directions.

One of the sleeve elements 23 is axially supported by a shoulder 25 on the spindle 20, whereas the other sleeve 24 is supported by a nut 26 engaging a thread 28 on the spindle 20. At the assembly of the rotor 16, the nut 26 is tightened up to the yield stress level of the spindle material so as to obtain the highest possible pretension of the magnetic core 22.

By the axial clamping of the magnetic core 22 between the sleeve elements 23, 24 and their support on the shoulder 25 and the nut 26, there is obtained an effective friction coupling between the spindle 20 and the magnetic core 22 for transferring torque therebetween.

By prestressing the magnetic disc core 22 as described above the core 22 acts as a structural means to take up bending forces on the rotor 16. This means in turn that the proportion magnetic material to inactive pure structural material in the cross section of the rotor 16 inside the stator core 15 may be high, i.e. higher than 55% by volume, preferably 75%-85%.

As illustrated in Figs 1 and 2, the rotor 16 has a high length to diameter ratio exceeding 3, which means that it has a low inertia to power output ratio. This makes the motor suitable for use in power tools, power wrenches in particular where a low moment of inertia is of importance to keep down the undesirable torque overshoot at tightening of so called stiff screw joints, i.e. screw joints with a steep torque growth to rotation characteristic.

## Claims

1. Electric synchronous motor, comprising a stator (10) with electric windings (14), and a rotor (16) including a spindle (20) and a magnetic core (22) formed by a number of annular magnetic discs (21) piled on said spindle (20) and separated from each other by layers (17) of an electrically insulating material,

   **characterized in** that said rotor (16) has a length to diameter ratio exceeding 3, that said spindle (20) comprises a clamping means (23-26) for axially prestressing said discs (21) towards each other, thereby accomplishing a high coefficient of elasticity of said rotor (16) as a whole, and that said insulating material is inorganic for resisting and maintaining said prestress.

2. Motor according to claim 1, wherein said insulating material is aluminium oxide.

3. Motor according to claim 1, wherein said clamping means (23-26) comprises two opposite shoulders (25, 26), one of which is formed by a nut (26) engaging a thread (28) on said spindle (20).

4. Motor according to claim 1, wherein the proportion of magnetic material to nonmagnetic material in the cross section of said rotor (16) exceeds 55 % by volume.

5. Motor according to claim 1, wherein said clamping means (23, 24) exerts a prestressing force on said discs (21) that corresponds to the yield stress level of said spindle (20).

## Patentansprüche

1. Elektrischer Synchronmotor mit einem Stator (10) mit elektrischen Wicklungen (14) und einem Rotor (16), der eine Welle (20) und einen Magnetkern (22) aufweist, der aus einer Anzahl ringförmiger Magnetscheiben (21) gebildet ist, die auf der Welle (20) aneinandergereiht und durch Schichten (17) aus einem elektrisch isolierenden Material voneinander getrennt sind, **dadurch gekennzeichnet,** daß der Rotor (16) ein Verhältnis von Länge zu Durchmesser größer als 3 hat, daß die Welle (20) Klemmittel (23 - 26) aufweist, um die Scheiben (21) gegeneinander axial vorzuspannen, so daß sich ein großer Elastizitätskoeffizient des Rotors (16) insgesamt ergibt, und daß das Isoliermaterial anorganisch ist, um der Vorspannung zu widerstehen und diese aufrecht zu erhalten.

2. Motor nach Anspruch 1, **dadurch gekennzeichnet,** daß das Isoliermaterial Aluminiumoxyd ist.

3. Motor nach Anspruch 1, **dadurch gekennzeichnet,** daß die Klemmittel (23 - 26) zwei gegenüberliegende Absätze (25, 25) aufweisen, von denen einer durch eine Mutter (26) gebildet ist, die in ein Gewinde (28) auf der Welle (20) eingreift.

4. Motor nach Anspruch 1, **dadurch gekennzeichnet,** daß das Verhältnis des Volumens von magnetischem Material zu nicht-magnetischem Material im Querschnitt des Rotors (16) 55 % übersteigt.

5. Motor nach Anspruch 1, **dadurch gekennzeichnet,** daß die Klemmittel (23, 24) auf die Scheiben (21) eine Vorspannungskraft ausüben, die dem Streckspannungsniveau der Welle (20) entspricht.

## Revendications

1. Moteur électrique synchrone, comprenant un stator (10) muni d'enroulements électriques (14), et un rotor (16) comportant un axe (20) et un noyau magnétique (22) constitué d'un certain nombre de disques magnétiques annulaires (21) empilés sur l'axe (20) et séparés les uns des autres par des couches (17) d'un matériau électriquement isolant, caractérisé en ce que le rotor (16) présente un rapport de sa longueur à son diamètre qui est supérieur à 3, en ce que l'axe (20) comprend des moyens de blocage (23-26) pour précontraindre axialement les disques (21) les uns vers les autres, ce qui permet ainsi d'obtenir un coefficient d'élasticité élevé du rotor (16) dans son ensemble, et en ce que le matériau isolant est un matériau inorganique destiné à résister à la précontrainte et à maintenir celle-ci.

2.   Moteur selon la revendication 1,
     caractérisé en ce que
     le matériau isolant est de l'oxyde d'aluminium.

3.   Moteur selon la revendication 1,
     caractérisé en ce que
     les moyens de blocage (23-26) comprennent deux
     épaulements opposés (25, 36) sont l'un est formé
     par un écrou (26) se vissant sur un pas de vis (28)
     de l'axe (20).

4.   Moteur selon la revendication 1,
     caractérisé en ce que
     la proportion du matériau magnétique au matériau
     non magnétique, dans la section transversale du rotor (16), dépasse 55 % en volume.

5.   Moteur selon la revendication 1,
     caractérisé en ce que
     les moyens de blocage (23-24) exercent sur les disques (21) une force de précontrainte qui correspond au niveau de contrainte limite de l'axe (20).

FIG 1

FIG 3

FIG 2

FIG 4

N

S